# EUROPEAN PATENT APPLICATION

(11) **EP 2 461 025 A2**
(43) Date of publication of application: **06.06.2012**
(21) Application number: 11190870.3
(22) Date of filing: 28.11.2011
(51) Int. Cl.: F03D 7/04, F03D 7/02

(54) **System, device, and method for noise-based operation of wind turbines**

(30) Priority: 06.12.2010 US 961322
(71) Applicant: General Electric Company, Schenectady, NY 12345 (US)
(72) Inventor: Loh, Friedrich, 48499 Salzbergen (DE); Petitjean, Benoit P., 48499 Salzbergen (DE); Morjaria, Mahesh A., Marietta, GA Georgia 30062 (US)
(74) Representative: Bedford, Grant Richard

(57) **Abstract**

A system (400) for use in operating a plurality of wind turbines (435,440,445) is provided. The system includes a plurality of wind turbine controllers (200), each wind turbine controller of the plurality of wind turbine controllers operatively coupled to a wind turbine of a plurality of wind turbines, and a site controller (415) coupled in communication with the plurality of wind turbine controllers and is configured to determine an aggregate noise level at a geographic position based on a plurality of noise levels associated with the plurality of wind turbines, compare the aggregate noise level to a target noise level associated with the geographic position, and when the aggregate noise level exceeds the target noise level, transmit an operational adjustment to a first wind turbine controller of the plurality of wind turbine controllers, wherein the first wind turbine controller is operatively coupled to a first wind turbine, and a noise level associated with the first wind turbine is reduced when the first wind turbine controller applies the operational adjustment.

## Description

The subject matter described herein relates generally to operating wind turbines and, more particularly, to automatically adjusting the operation of one or more wind turbines based on a comparison of an aggregate noise level to a target noise level.

Wind turbines utilize wind energy to generate or produce electrical power. Operation of one or more wind turbines within a site produces noise that may be audible at locations adjacent the site. Because such noise may be considered a nuisance, maximum noise levels may be imposed.

An operator of a wind farm may operate one or more wind turbines at a less than full level of operation (e.g., power output) in the interest of compliance with noise level restrictions. However, selecting a level of operation that ensures the noise level stays below a maximum level may have a significant negative effect on the output of the wind farm. Further, adjusting the level of operation based on changing conditions, such as wind turbine outages and weather conditions, requires continually monitoring such conditions and manually applying adjustments to wind turbines. Such manual effort delays adjustment and increases the expense of operating a wind turbine site.

In one aspect according to the present invention, a system for use in operating a plurality of wind turbines is provided. The system includes a plurality of wind turbine controllers. Each wind turbine controller is operatively coupled to a wind turbine of a plurality of wind turbines. The system also includes a site controller that is coupled in communication with the plurality of wind turbine controllers and configured to determine an aggregate noise level at a geographic position based on a plurality of noise levels associated with the plurality of wind turbines. The site controller is also configured to compare the aggregate noise level to a target noise level associated with the geographic position. When the aggregate noise level exceeds the target noise level, the site controller is configured to transmit an operational adjustment to a first wind turbine controller of the plurality of wind turbine controllers. The first wind turbine controller is operatively coupled to a first wind turbine, and a noise level associated with the first wind turbine is reduced when the first wind turbine controller applies the operational adjustment

In another aspect, a device for use in operating a plurality of wind turbines is provided. The device includes a memory device that is configured to store a target noise level associated with a geographic position. The device also includes a processor that is coupled to the memory device and programmed to determine an aggregate noise level at the geographic position. The aggregate noise level represents a combination of noise levels associated with a plurality of wind turbines. The processor is also programmed to compare the aggregate noise level to the target noise level. The device also includes a communication interface that is coupled to the processor and configured to transmit an operational adjustment to at least a first wind turbine controller of the plurality of wind turbine controllers when the aggregate noise level differs substantially from the target noise level. The first wind turbine controller is operatively coupled to a first wind turbine, and the difference between the aggregate noise level and the target noise level decreases when the first wind turbine controller applies the operational adjustment to the first wind turbine.

In yet another aspect, one or more computer readable storage media having computer-executable instructions embodied thereon are provided. When executed by at least one processor, the computer-executable instructions cause the processor to calculate an aggregate noise level at a geographic position, to compare the aggregate noise level to a target noise level associated with the geographic position, and to transmit an operational adjustment to at least one wind turbine controller when the aggregate noise level differs substantially from the target noise level. The difference between the aggregate noise level and the target noise level decreases when the first wind turbine controller applies the operational adjustment to a fist wind turbine.

Various aspects and embodiments of the present invention will now be described in connection with the accompanying drawings, in which:
Fig. 1 is a perspective view of an exemplary wind turbine.
Fig. 2 is a block diagram illustrating an exemplary wind turbine controller for use with the wind turbine shown in Fig. 1.
Fig. 3 is a block diagram illustrating an exemplary computing device.
Fig. 4 is a block diagram illustrating an exemplary system for use in operating one or more wind turbines, such as the wind turbine shown in Fig. 1.
Fig. 5 is a flowchart of an exemplary method for use in operating one or more wind turbines using the system shown in Fig. 4.

Various of the embodiments described herein facilitate operating one or more wind turbines in a site by automatically responding to noise levels within or near the site. Noise levels may be determined by direct measurement and/or by calculating noise levels based on wind turbine characteristics (e.g., wind turbine dimensions, blade geometry, and/or blade surface roughness) and/or operating conditions (e.g., wind speed and/or wind direction). When an aggregate noise level, representing noise from multiple wind turbines within a site, deviates substantially from a target noise level, an operational adjustment may be transmitted to one or more wind turbine controllers that are coupled to the wind turbines.

A target noise level may include, without limitation, a noise level defined by a regulation (e.g., enacted by a municipality or other government body), by a contractual or property-based obligation, or by a preference of an operator of a wind turbine site. For example, the target noise level associated with a geographic position may be a maximum noise level defined for a type of property (e.g., residential, commercial, or recreational) corresponding to the geographic position.

In some embodiments, in response to an aggregate noise level above the target noise level, an operational adjustment is calculated to reduce the aggregate noise level, facilitating compliance with the target noise level. In other embodiments, in response to an aggregate noise level below the target noise level, an operational adjustment is calculated to permit increasing the aggregate noise level, facilitating increasing the power output of the site.

Certain embodiments are described herein with reference to geographic positions. As used herein the term "geographic position" refers to a point in a two-dimensional or three-dimensional space. For example, a geographic position may be expressed in two dimensions as a latitude and a longitude, or in three dimensions as a latitude, a longitude, and an elevation.

An exemplary technical effect of various of the methods, systems, and apparatus described herein may include at least one of: (a) calculating an aggregate noise level at one or more geographic positions; (b) comparing the aggregate noise level to a target noise level associated with the geographic position; and (c) transmitting an operational adjustment to at least one wind turbine controller when the aggregate noise level differs substantially from the target noise level.

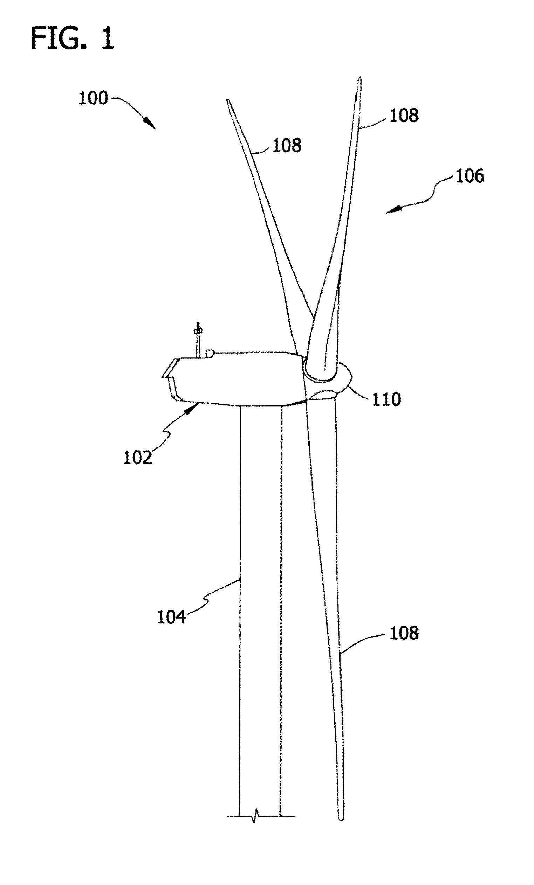

Fig. 1 is a perspective view of an exemplary wind turbine 100. Wind turbine 100 includes a nacelle 102 that houses a generator (not shown in Fig. 1). Nacelle 102 is mounted on a tower 104 (only a portion of tower 104 is shown in Fig. 1). Tower 104 may have any suitable height that facilitates operation of wind turbine 100 as described herein. In an exemplary embodiment, wind turbine 100 also includes a rotor 106 that includes three rotor blades 108 coupled to a rotating hub 110. Alternatively, wind turbine 100 may include any number of rotor blades 108 that enable operation of wind turbine 100 as described herein. In an exemplary embodiment, wind turbine 100 includes a gearbox (not shown) that is rotatably coupled to rotor 106 and to the generator.

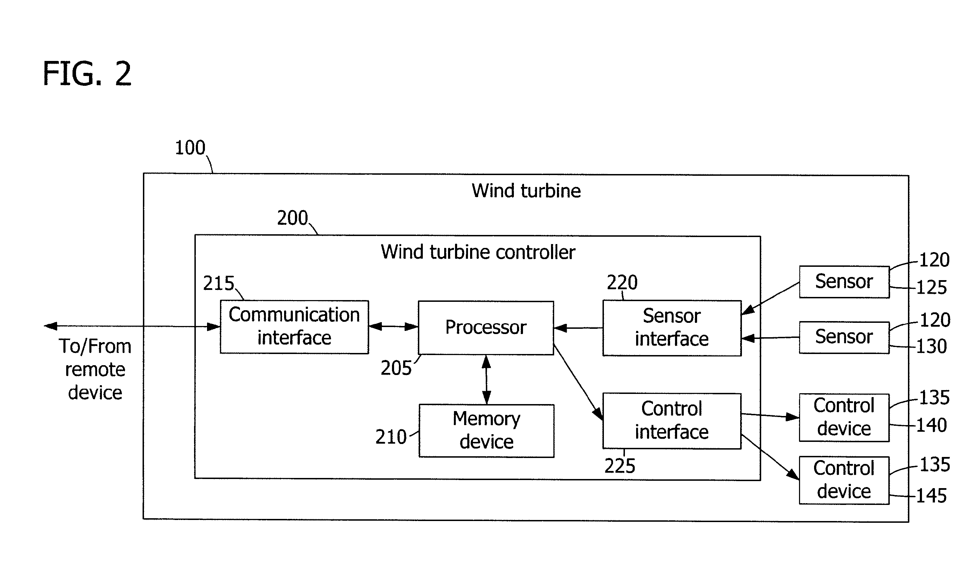

In some embodiments, wind turbine 100 includes one or more sensors 120 and/or control devices 135 (shown in Fig. 2). Sensors 120 sense or detect wind turbine operating conditions. For example, sensor(s) 120 may include a wind speed and/or a direction sensor (e.g., an anemometer), an ambient air temperature sensor, an air density sensor, an atmospheric pressure sensor, a humidity sensor, a power output sensor, a blade pitch sensor, a turbine speed sensor, a gear ratio sensor, and/or any sensor suitable for use with wind turbine 100. Each sensor 120 is located according to its function. For example, an anemometer may be positioned on an outside surface of nacelle 102, such that the anemometer is exposed to air surrounding wind turbine 100. Each sensor 120 generates and transmits one or more signals corresponding to a detected operating condition. For example, an anemometer transmits a signal indicating a wind speed and/or a wind direction. Moreover, each sensor 120 may transmit a signal continuously, periodically, or only once, for example, though other signal timings are also contemplated. Furthermore, each sensor 120 may transmit a signal either in an analog form or in a digital form.

Control devices 135 are configured to control an operation of wind turbine 100 and may include, without limitation, a brake, a relay, a motor, a solenoid, and/or a servomechanism. A control device 135 may adjust a physical configuration of wind turbine 100, such as an angle or pitch of rotor blades 108 and/or an orientation of nacelle 102 or rotor 106 with respect to tower 104.

Fig. 2 is a block diagram illustrating an exemplary wind turbine controller 200 for use with wind turbine 100. Wind turbine controller 200 includes a processor 205 for executing instructions and a memory device 210 configured to store data, such as computer-executable instructions and operating parameters.

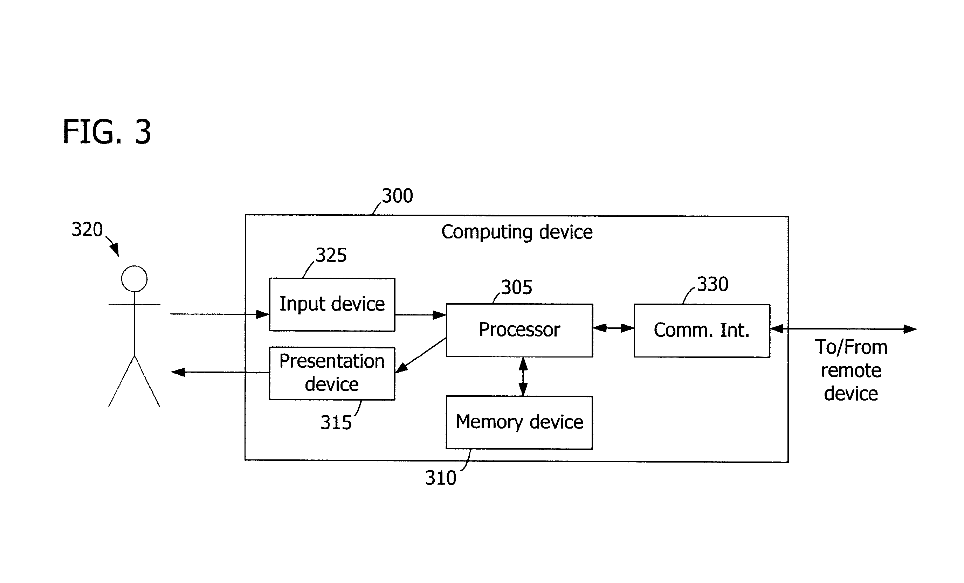

Wind turbine controller 200 also includes a communication interface 215. Communication interface 215 is configured to be coupled in signal communication with one or more remote devices, such as another wind turbine controller 200 and/or a computing device (shown in Fig. 3).

In some embodiments, wind turbine controller 200 includes one or more sensor interfaces 220. Sensor interface 220 is configured to be communicatively coupled to one or more sensors 120, such as a first sensor 125 and a second sensor 130, and may be configured to receive one or more signals from each sensor 120. Sensor interface 220 facilitates monitoring and/or operating wind turbine 100. For example, wind turbine controller 200 may monitor operating conditions (e.g., wind speed, wind direction, rotor speed, and/or power output) of wind turbine 100 based on signals provided by sensors 120. In an exemplary embodiment, processor 205 executes one or more monitoring software applications and/or control software applications. A software application may produce one or more operating parameters that indicate an operating condition, and memory device 210 may be configured to store the operating parameters. For example, a history of operating parameters may be stored in memory device 210.

In some embodiments, wind turbine controller 200 also includes a control interface 225, which is configured to be communicatively coupled to one or more control devices 135, such as a first control device 140 and a second control device 145. In one embodiment, wind turbine control interface 225 is configured to operate control device 135 including a brake to prevent rotor 106 (shown in Fig. 1) from rotating. In addition, or in the alternative, wind turbine control interface 225 may operate a control device 135 including a blade pitch servomechanism to adjust one or more rotor blades 108 (shown in Fig. 1) to a desired and/or predetermined pitch. The brake and the blade pitch servomechanism may be operated by the same control device 135 or a first control device 135 and a second control device 135. In some embodiments, wind turbine controller 200 is configured to operate control devices 135 to achieve a desired noise level and/or a desired power output.

Fig. 3 is a block diagram illustrating an exemplary computing device 300. Computing device 300 includes a processor 305 for executing instructions. In some embodiments, executable instructions are stored in a memory device 310. Memory device 310 is any device allowing information, such as executable instructions and/or other data, to be stored and retrieved.

In some embodiments, computing device 300 includes at least one presentation device 315 for presenting information to user 320. Presentation device 315 is any component capable of conveying information to user 320. Presentation device 315 may include, without limitation, a display device (e.g., a liquid crystal display (LCD), organic light emitting diode (OLED) display, or "electronic ink" display) and/or an audio output device (e.g., a speaker or headphones). In some embodiments, presentation device 315 includes an output adapter, such as a video adapter and/or an audio adapter. An output adapter is operatively coupled to processor 305 and configured to be operatively coupled to an output device, such as a display device or an audio output device.

In some embodiments, computing device 300 includes an input device 325 for receiving input from user 320. Input device 325 may include, for example, a keyboard, a pointing device, a mouse, a stylus, a touch sensitive panel (e.g., a touch pad or a touch screen), a gyroscope, an accelerometer, a position detector, and/or an audio input device. A single component, such as a touch screen, may function as both an output device of presentation device 315 and input device 325. Computing device 300 also includes a communication interface 330, which is configured to be communicatively coupled to one or more wind turbine controllers 200 and/or one or more other computing devices 300.

Stored in memory device 310 are, for example, computer readable instructions for determining and responding to noise levels, providing a user interface to user 320 via presentation device 315, and/or receiving and processing input (e.g., target noise levels) from input device 325. In addition, or alternatively, memory device 310 may be configured to store target noise levels, measured noise levels, calculated noise levels, and/or any other data suitable for use with the methods described herein.

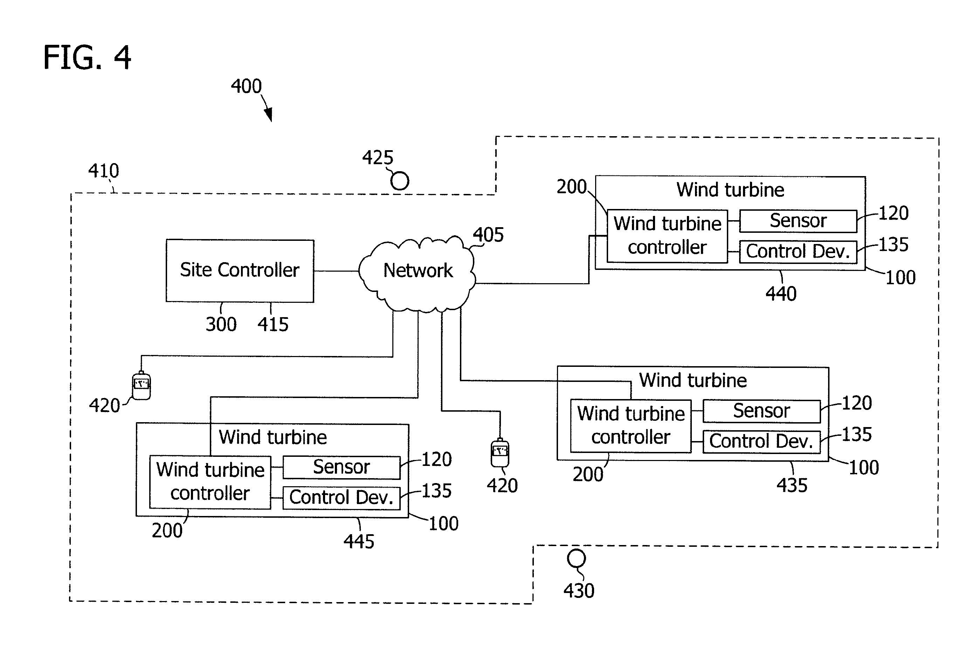

Fig. 4 is a block diagram illustrating an exemplary system 400 for use in operating one or more wind turbines 100. System 400 includes a network 405. For example, network 405 may include, without limitation, the Internet, a local area network (LAN), a wide area network (WAN), a wireless LAN (WLAN), a mesh network, and/or a virtual private network (VPN).

In an exemplary embodiment, a wind turbine site 410 includes a plurality of wind turbines 100, each of which includes a wind turbine controller 200. One or more computing devices 300 (shown in Fig. 3), such as a site controller 415, are configured to be coupled in signal communication with wind turbine controllers 200 via network 405.

In an exemplary embodiment, site controller 415 is positioned at wind turbine site 410. Alternatively, site controller 415 may be positioned outside wind turbine site 410. For example, site controller 415 may be communicatively coupled to wind turbine controllers 200 at a plurality of wind turbine sites 410.

Each of site controller 415 and wind turbine controller 200 includes a processor, as shown in Figs. 2 and 3. A processor may include a processing unit, such as, without limitation, an integrated circuit (IC), an application specific integrated circuit (ASIC), a microcomputer, a programmable logic controller (PLC), and/or any other programmable circuit. A processor may include multiple processing units (e.g., in a multi-core configuration). Each of site controller 415 and wind turbine controller 200 is configurable to perform the operations described herein by programming the corresponding processor. For example, a processor may be programmed by encoding an operation as one or more executable instructions and providing the executable instructions to the processor in a memory device (also shown in Figs. 2 and 3) that is coupled to the processor. A memory device may include, without limitation, one or more random access memory (RAM) devices, one or more storage devices, and/or one or more computer readable media.

In some embodiments, one or more audio sensors 420 are coupled in communication with site controller 415. Audio sensors 420 are configured to provide a noise level measurement indicating an intensity of noise at a corresponding geographic position. For example, audio sensors 420 may be configured to indicate a sound pressure level (SPL). In one embodiment, sensors 120 of one or more wind turbines 100 include an audio sensor 420. Audio sensors 420 may include omnidirectional microphones. Alternatively, or in addition, audio sensors 420 may include directional microphones that are configured to provide a noise level measurement and a direction associated with a noise level measurement. For example, an audio sensor 420 may provide noise level measurements associated with a plurality of directions (e.g., each of the cardinal directions and one or more directions therebetween) at a single geographic position. In an exemplary embodiment, system 400 enables operation of wind turbines 100 such that an aggregate noise level does not exceed target noise levels associated with a first geographic position 425 and a second geographic position 430. System 400 may further enable operation of wind turbines 100 such that power output of site 410 is optimized within the bounds of the target noise levels.

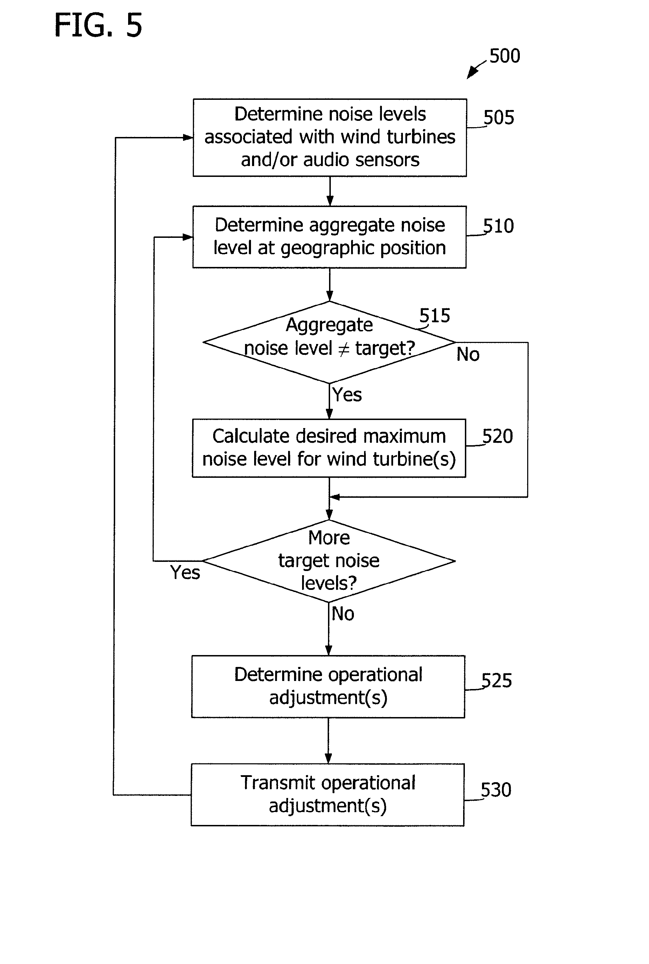

Fig. 5 is a flowchart of an exemplary method 500 for use in operating one or more wind turbines 100 using system 400 (shown in Fig. 4). Referring to Figs. 4 and 5, in an exemplary embodiment, site controller 415 determines 505 noise levels associated with wind turbines 100 and/or audio sensors 420. For example, site controller 415 may determine 505 a noise level produced by a wind turbine 100 at a geographic position associated with the wind turbine 100 and/or a noise level measured at one or more geographic positions associated with audio sensors 420. Measured noise levels may optionally be associated with directions. In addition, or alternatively, noise levels may be determined 505 by predicting or estimating the noise level of a wind turbine 100 based on previously recorded noise level measurements, as described in more detail below.

In one embodiment, a wind turbine controller 200 is configured to calculate a noise level produced by the corresponding wind turbine 100 based on one or more wind turbine characteristics (e.g., wind turbine dimensions, rotor dimensions, rotor blade geometry, and/or rotor blade solidity), one or more operating parameters (e.g., wind speed, wind direction, rotor speed, rotor blade tip speed, rotor blade pitch angle, thrust loading, and/or power output), and/or an operational state (e.g., disabled, curtailed, or normal) of a wind turbine 100. Wind turbine controller 200 transmits the calculated noise level to site controller 415. In another embodiment, wind turbine controller 200 transmits the wind turbine characteristics, operating parameters, and/or operational state to site controller 415, and site controller 415 calculates the noise level produced by wind turbine 100.

A determination 505 of noise level based on such data may be performed using a transfer function or a reference table (also known as a "lookup table"). In one embodiment, wind turbine 100, or a similar wind turbine, is monitored with a plurality of audio sensors 420 (e.g., arranged in a circle centered about wind turbine 100) while wind turbine 100 is operating, and noise level measurements from audio sensors 420 are correlated with wind turbine characteristics, operating parameters, and/or operational states. A transfer function or a reference table may be created based on these correlations and stored at wind turbine controller 200, such that noise levels produced by wind turbine 100 may be determined 505 subsequently based on known wind turbine characteristics, operating parameters, and/or operational states.

Whether performed by wind turbine controller 200 or site controller 415, calculating a noise level produced by a wind turbine 100 provides a noise level associated with a corresponding geographic position. In addition, or alternatively, audio sensors 420 may provide noise level measurements indicating a noise level associated with a geographic position and, optionally, with a plurality of directions. In some embodiments, an audio sensor 420 is included as a sensor 120 of one or more wind turbines 100. The noise level associated with a wind turbine 100 may be determined 505 based at least in part on noise level measurements, such as noise level measurements associated with a direction pointing approximately toward (e.g., within 5, 10, or 20 degrees of) wind turbine 100.

Site controller 415 determines 510 an aggregate noise level at one or more geographic positions, such as first geographic position 425 and second geographic position 430 based on the calculated and/or measured noise levels. When measured noise levels are used, the aggregate noise level may be determined 510 based further on a direction associated with noise level measurement.

In an exemplary embodiment, the aggregate noise level at first geographic position 425 is determined 510 based at least in part on each of the noise levels and a distance between first geographic position 425 and a geographic position associated with each noise level. Such an embodiment facilitates accounting for the attenuation of noise over a distance. The aggregate noise level may be further based on a wind direction, the presence of obstacles (e.g,. structures and/or natural features) between first geographic position 425 and a geographic position associated with each noise level, and/or any other factors affecting the propagation of noise. In one embodiment, the aggregate noise level is determined 510 at least in part by using the method described in ISO 9613-2, "Acoustics -- Attenuation of sound during propagation outdoors -- Part 2: General method of calculation."

Site controller 415 compares 515 the calculated aggregate noise level to a target noise level associated with the geographic position. For example, the aggregate noise level and the target noise level may be expressed as an intensity or sound pressure level (SPL), expressed in decibels (dB). In some embodiments, site controller 415 compares 515 the aggregate noise level to a target noise level that is selected based on a predetermined schedule. For example, a schedule may define target noise levels for a geographic position based on a time of day, a day of the week, and/or a time of year. In one embodiment, a schedule defines a first target noise level for a geographic position during daytime hours (e.g., 8 a.m. to 8 p.m.) and a second target noise level for the geographic position during nighttime hours (e.g., 8 p.m. to 8 a.m.).

If the aggregate noise level differs substantially from the target noise level, site controller 415 calculates 520 a desired maximum noise level for one or more wind turbines 100. In an exemplary embodiment, the aggregate noise level is considered to differ substantially from the target noise level if the aggregate noise level exceeds the target noise level or if the aggregate noise level is less than the target noise level by more than a predetermined threshold value. The threshold value may be defined in absolute (e.g., 2 db, 3 dB, or 5 dB) or relative (e.g., 3%, 5%, or 10%) terms.

Such a determination 510 and comparison 515 may be performed for each target noise level. In an exemplary embodiment, when target noise levels are defined for multiple geographic positions, calculating 520 the desired maximum noise level for a wind turbine 100 may include applying a minimum function to a current value and a previous value. For example, if a desired maximum noise level of 50 dB is calculated 520 for a first wind turbine 435 with regard to first geographic position 425, and a desired maximum noise level of 48 dB is calculated 520 for first wind turbine 435 with regard to second geographic position 430, the effective desired maximum noise level for first wind turbine 435 would be *min*(50, 48) = 48 dB. In contrast, if a desired maximum noise level of 51 dB was calculated 520 with regard to second geographic position 430, the effective desired maximum noise level for first wind turbine 435 would be *min*(50,51) = 50 dB.

Based on the desired maximum noise level associated with a wind turbine 100, site controller 415 determines 525 an operational adjustment. In one embodiment, determining 525 an operational adjustment includes transmitting the desired maximum noise level associated with a wind turbine 100 to a corresponding wind turbine controller 200. In such an embodiment, wind turbine controller 200 is configured to adjust operating parameters of wind turbine 100 to achieve the desired maximum noise level. For example, wind turbine controller 200 may adjust operating parameters based on the desired maximum noise level and a predetermined transfer function or reference table. In another embodiment, site controller 415 is configured to determine one or more operating parameters (e.g., a rotor blade pitch angle, a maximum rotor blade speed, a maximum torque, and/or a maximum power output level) for wind turbine 100 and transmit to wind turbine controller 200 an operational adjustment that includes the determined operating parameters.

Operational adjustments may be determined 525 such that a difference between the aggregate noise level and the target noise level decreases when the operational adjustment is applied. When the aggregate noise level exceeds the target noise level at a geographic position, an operational adjustment may be determined 525 to reduce the aggregate noise level at the geographic position substantially to or below the target noise level. When the aggregate noise level is substantially below the target noise level an operational adjustment may be determined 525 to allow a higher noise level, enabling an increase in power output.

Site controller transmits 530 an operational adjustment to at least one wind turbine controller 200. When wind turbine controller 200 applies the operational adjustment to a wind turbine 100, the difference between the aggregate noise level and the target noise level decreases. For example, when the aggregate noise level exceeds the target noise level, wind turbine controller 200 may apply the operational adjustment such that a noise level produced by wind turbine 100 and, accordingly, the aggregate noise level, decrease.

In some embodiments, noise levels are evaluated based at least in part on audio frequency. In such an embodiment, measured and/or calculated noise levels may indicate an intensity of noise over a range of frequencies. Comparing 515 the aggregate noise level to the target noise level may include weighting frequency ranges of the aggregate noise level and the target noise level based on a model of human hearing. For example, noise near 1 kilohertz (kHz) may be weighted more heavily than noise near 10 kHz is weighted. In one embodiment, A-weighting and/or ITU-R 468 noise weighting is applied to the noise levels.

Method 500 may be performed repeatedly (e.g., continuously, periodically, or upon request), enabling continual adjustment to operation of wind turbines 100 in site 410. For example, as the wind direction changes, the aggregate noise level at second geographic position 430 may increase, while the aggregate noise level at first geographic position 425 decreases. Accordingly, operational adjustments may be determined 525 and transmitted 530 to ensure the target noise level at second geographic position 430 is not exceeded.

Similarly, if a wind turbine, such as first wind turbine 435, is disabled for maintenance or repair, or is operated at a reduced level of operation for any reason, the aggregate noise level decreases, and site controller 415 may automatically increase a desired maximum noise level associated with a second wind turbine 440 and a third wind turbine 445, such that the power output of second wind turbine 440 and third wind turbine 445 is increased. When first wind turbine 435 is activated again, noise produced by first wind turbine 435 is reflected in the aggregate noise level, and site controller 415 may adjust the desired maximum noise level of second wind turbine 440 and third wind turbine 445 downward to ensure compliance with the target noise levels.

Various embodiments provided herein can facilitate automatically and continually adjusting the operation of wind turbines based on a calculated aggregate noise level at one or more geographic positions that are associated with a target noise level. Aggregate noise levels may be calculated based on calculated and/or measured noise levels associated with wind turbines and/or audio sensors in a site. Adjusting wind turbine operation as described herein enables an operator of a wind turbine site to optimize power output while ensuring compliance with noise regulations and other obligations. Further, certain of the methods described herein may facilitate automatically applying noise-based operational adjustments to wind turbines without the delay and expense of manual intervention.

The methods described herein may be encoded as executable instructions embodied in a computer readable storage medium including, without limitation, a memory device of a computing device. Such instructions, when executed by a processor, cause the processor to perform at least a portion of the methods described herein.

Exemplary embodiments of a wind turbine control system are described above in detail. The system, devices, wind turbine, and included assemblies are not limited to the specific embodiments described herein, but rather each component may be utilized independently and separately from other components described herein.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A system for use in operating a plurality of wind turbines, the system comprising:
   a plurality of wind turbine controllers, each wind turbine controller of the plurality of wind turbine controllers operatively coupled to a wind turbine of a plurality of wind turbines; and,
   a site controller coupled in communication with the plurality of wind turbine controllers and configured to:
      determine an aggregate noise level at a geographic position based on a plurality of noise levels associated with the plurality of wind turbines;
      compare the aggregate noise level to a target noise level associated with the geographic position; and,
      when the aggregate noise level exceeds the target noise level, transmit an operational adjustment to a first wind turbine controller of the plurality of wind turbine controllers, wherein the first wind turbine controller is operatively coupled to a first wind turbine, and a noise level associated with the first wind turbine is reduced when the first wind turbine controller applies the operational adjustment.
2. A system in accordance with clause 1, wherein the site controller is configured to determine the aggregate noise level at least in part by:
   receiving a first noise level associated with the first wind turbine from the first wind turbine controller; and,
   calculating a second noise level at the geographic position based at least in part on the first noise level and a distance between the geographic position and the first wind turbine.
3. A system in accordance with any preceding clause, wherein the first wind turbine controller is configured to calculate the noise level based on at least one of a rotor blade geometry, a rotor blade surface roughness, a wind speed, a wind direction, a rotor blade tip speed, a rotor blade pitch angle, and an operational state of the first wind turbine.
4. A system in accordance with any preceding clause, wherein the site controller is configured to determine the aggregate noise level at least in part by calculating a noise level associated with the first wind turbine.
5. A system in accordance with any preceding clause, further comprising one or more audio sensors configured to provide a noise level measurement, wherein the site controller is configured to determine the aggregate noise level at least in part by sampling the noise level measurements provided by the audio sensors.
6. A system in accordance with any preceding clause, wherein the target noise level is a maximum noise level associated with the geographic position, and the operational adjustment is calculated by the site controller to reduce the noise level at the geographic position substantially to the maximum noise level.
7. A system in accordance with any preceding clause, wherein the operational adjustment is a first operational adjustment, and when the aggregate noise level is below the target noise level, the site controller is configured to transmit a second operational adjustment to the first wind turbine controller, wherein the noise level associated with the first wind turbine and a power output associated with the first wind turbine are increased when the first wind turbine controller applies the second operational adjustment.
8. A system in accordance with any preceding clause, wherein the aggregate noise level is a first aggregate noise level at a first geographic position that is associated with a first target noise level, and the site controller is further configured to:
   calculate the first aggregate noise level based on a noise level and a distance from the first geographic position that are associated with each wind turbine of the plurality of wind turbines;
   calculate a second aggregate noise level at a second geographic position that is associated with a second target noise level, wherein the second aggregate noise level is based on a noise level and a distance from the second geographic position that are associated with each wind turbine of the plurality of wind turbines; and,
   when the second aggregate noise level exceeds the second target noise level, transmit an operational adjustment to at least one wind turbine of the plurality of wind turbines.
9. A device for use in operating a plurality of wind turbines, the device comprising:
   a memory device configured to store a target noise level associated with a geographic position;
   a processor coupled to the memory device and programmed to:
      determine an aggregate noise level at the geographic position, the aggregate noise level representing a combination of noise levels associated with a plurality of wind turbines; and,
      compare the aggregate noise level to the target noise level; and,
      a communication interface coupled to the processor and configured to transmit an operational adjustment to at least a first wind turbine controller of the plurality of wind turbine controllers when the aggregate noise level differs substantially from the target noise level, the first wind turbine controller operatively coupled to a first wind turbine, wherein the difference between the aggregate noise level and the target noise level decreases when the first wind turbine controller applies the operational adjustment to the first wind turbine.
10. A device in accordance with any preceding clause, wherein the communication interface is further configured to receive a noise level from the first wind turbine controller, and the processor is programmed to determine the aggregate noise level based at least in part on the received noise level.
11. A device in accordance with any preceding clause, wherein the communication interface is further configured to receive one or more operating parameters from the first wind turbine controller, and the processor is further programmed to:
   calculate a noise level associated with the first wind turbine based on the operating parameters; and,
   determine the aggregate noise level based at least in part on the calculated noise level.
12. A device in accordance with any preceding clause, wherein the communication interface is configured to transmit an operational adjustment to the first wind turbine controller by transmitting to the first wind turbine controller a desired maximum noise level associated with the first wind turbine.
13. A device in accordance with any preceding clause, wherein the communication interface is configured to transmit an operational adjustment to the first wind turbine controller by transmitting to the first wind turbine controller at least one of a rotor blade pitch angle, a maximum rotor blade speed, a maximum torque, and a maximum power output level.
14. A device in accordance with any preceding clause, wherein the operational adjustment is a first operational adjustment, and the communication interface is further configured to transmit a second operational adjustment to a second wind turbine controller that is operatively coupled to a second wind turbine when the aggregate noise level differs substantially from the target noise level.
15. A device in accordance with any preceding clause, wherein the aggregate noise level is a first aggregate noise level at a first geographic position that is associated with a first target noise level, and the processor is further programmed to:
   determine a second aggregate noise level at a second geographic position that is associated with a second target noise level; and,
   compare the second aggregate noise level to the second target noise level, wherein the communication interface is further configured to transmit an operational adjustment to at least one wind turbine of the plurality of wind turbines when the second aggregate noise level differs substantially from the second target noise level.
16. One or more computer readable storage media having computer-executable instructions embodied thereon, wherein when executed by at least one processor, the computer-executable instructions cause the processor to:
   calculate an aggregate noise level at a geographic position;
   compare the aggregate noise level to a target noise level associated with the geographic position; and,
   transmit an operational adjustment to at least one wind turbine controller when the aggregate noise level differs substantially from the target noise level, wherein the difference between the aggregate noise level and the target noise level decreases when the first wind turbine controller applies the operational adjustment to a first wind turbine.
17. One or more computer readable storage media in accordance with any preceding clause, wherein the computer-executable instructions cause the processor to calculate the aggregate noise level based at least in part on a plurality of noise level measurements, each noise level measurement of the plurality of noise level measurements corresponding to a geographic position.
18. One or more computer readable storage media in accordance with any preceding clause, wherein each noise level measurement of the plurality of noise level measurements further corresponds to a direction, and the computer-executable instructions cause the processor to calculate the aggregate noise level based further on the direction associated with each noise level measurement.
19. One or more computer readable storage media in accordance with any preceding clause, wherein the aggregate noise level is a first aggregate noise level at a first geographic position associated with a first target noise level, and when executed by the processor, the computer-executable instructions further cause the processor to:
   calculate a second aggregate noise level at a second geographic position;
   compare the second aggregate noise level to a second target noise level associated with the geographic position; and
   determine the operational adjustment based on a first difference between the first aggregate noise level and the first target noise level, and a second difference between the second aggregate noise level and the second target noise level.
20. One or more computer readable storage media in accordance with any preceding clause, wherein the computer-executable instructions cause the processor to transmit the operational adjustment by transmitting a desired maximum noise level associated with the first wind turbine.

## Claims

1. A system (400) for use in operating a plurality of wind turbines (435,440,445), the system comprising:
a plurality of wind turbine controllers (200), each wind turbine controller of the plurality of wind turbine controllers operatively coupled to a wind turbine of a plurality of wind turbines; and
a site controller (415) coupled in communication with the plurality of wind turbine controllers and configured to:
determine an aggregate noise level at a geographic position based on a plurality of noise levels associated with the plurality of wind turbines;
compare the aggregate noise level to a target noise level associated with the geographic position; and
when the aggregate noise level exceeds the target noise level, transmit an operational adjustment to a first wind turbine controller of the plurality of wind turbine controllers, wherein the first wind turbine controller is operatively coupled to a first wind turbine, and a noise level associated with the first wind turbine is reduced when the first wind turbine controller applies the operational adjustment.

2. A system (400) in accordance with claim 1, wherein the site controller (415) is configured to determine the aggregate noise level at least in part by:
receiving a first noise level associated with the first wind turbine (435) from the first wind turbine controller (200); and
calculating a second noise level at the geographic position based at least in part on the first noise level and a distance between the geographic position and the first wind turbine.

3. A system (400) in accordance with any preceding claim, wherein the first wind turbine controller (200) is configured to calculate the noise level based on at least one of a rotor blade geometry, a rotor blade surface roughness, a wind speed, a wind direction, a rotor blade tip speed, a rotor blade pitch angle, and an operational state of the first wind turbine (435).

4. A system (400) in accordance with any preceding claim, wherein the site controller (415) is configured to determine the aggregate noise level at least in part by calculating a noise level associated with the first wind turbine (435).

5. A system (400) in accordance with any preceding claim, further comprising one or more audio sensors (420) configured to provide a noise level measurement, wherein the site controller (415) is configured to determine the aggregate noise level at least in part by sampling the noise level measurements provided by the audio sensors.

6. A system (400) in accordance with any preceding claim, wherein the target noise level is a maximum noise level associated with the geographic position, and the operational adjustment is calculated by the site controller (415) to reduce the noise level at the geographic position substantially to the maximum noise level.

7. A system (400) in accordance with any preceding claim, wherein the operational adjustment is a first operational adjustment, and when the aggregate noise level is below the target noise level, the site controller (415) is configured to transmit a second operational adjustment to the first wind turbine controller (435), wherein the noise level associated with the first wind turbine and a power output associated with the first wind turbine are increased when the first wind turbine controller applies the second operational adjustment.

8. A system (400) in accordance with any preceding claim, wherein the aggregate noise level is a first aggregate noise level at a first geographic position that is associated with a first target noise level, and the site controller (415) is further configured to:
calculate the first aggregate noise level based on a noise level and a distance from the first geographic position that are associated with each wind turbine of the plurality of wind turbines (435,440,445);
calculate a second aggregate noise level at a second geographic position that is associated with a second target noise level, wherein the second aggregate noise level is based on a noise level and a distance from the second geographic position that are associated with each wind turbine of the plurality of wind turbines; and
when the second aggregate noise level exceeds the second target noise level, transmit an operational adjustment to at least one wind turbine of the plurality of wind turbines.

9. A device for use in operating a plurality of wind turbines (100), the device comprising:
a memory device (210) configured to store a target noise level associated with a geographic position;
a processor (205) coupled to the memory device and programmed to:
determine an aggregate noise level at the geographic position, the aggregate noise level representing a combination of noise levels associated with a plurality of wind turbines; and
compare the aggregate noise level to the target noise level; and
a communication interface (215) coupled to the processor and configured to transmit an operational adjustment to at least a first wind turbine controller (435) of the plurality of wind turbine controllers when the aggregate noise level differs substantially from the target noise level, the first wind turbine controller operatively coupled to a first wind turbine, wherein the difference between the aggregate noise level and the target noise level decreases when the first wind turbine controller applies the operational adjustment to the first wind turbine.

10. A device in accordance with claim 9, wherein the communication interface (215) is further configured to receive a noise level from the first wind turbine controller (435), and the processor (205) is programmed to determine the aggregate noise level based at least in part on the received noise level.
